# EUROPEAN PATENT APPLICATION

(11) **EP 0 797 352 A1**
(43) Date of publication of application: **24.09.1997**
(21) Application number: 97301791.6
(22) Date of filing: 18.03.1997
(51) Int. Cl.: H04N 5/272

(54) **Picture replacement system, device and method**

(30) Priority: 18.03.1996 JP 60449/96
(71) Applicant: NIPPON TELEVISION NETWORK CORPORATION, Tokyo 102 (JP)
(72) Inventor: Ishida, Masayuki, Nippon Television Network Corp., Chiyoda-ku, Tokyo (JP); Koguma, Toru, Nippon Television Network Corp., Chiyoda-ku, Tokyo (JP)
(74) Representative: Orchard, Oliver John

(57) **Abstract**

A picture replacement system for replacing a specified area of a present picture with a desired picture comprising: at least one camera; picture generation means for generating a desired picture for replacing; selection means for selecting a replacement area within a reference picture in advance and storing a position of the replacement area and a reference picture within the replacement area; detection means for detecting a replacement area within a present picture taken by the camera based on the position of the replacement area and the reference picture within the replacement area; key signal generation means for generating a key signal indicating an identical part of a present picture within the detected replacement area and the stored reference picture; and replacement means for replacing an identical part of a present picture and a reference picture within a part picture of the desired picture corresponding to the identical part based on the key signal.

## Description

The present invention relates to an art of replacing a specified area of a picture with a desired picture. The present invention further relates to an art of picture replacement process in such a manner that the specified area of the present picture is naturally replaced with the picture showing that such picture appears to have existed as a part of the present picture.

Accompanied with the recent prosperity of TV broadcasting, a large number of advertisements have appeared on TV. For example, when watching a baseball game on TV, viewers see not only the game played by the players but also advertisements shown on the fence of the stadium behind baseball players, for example, company names, logos, slogans and the like.

There has been such circumstance that only a certain logo is required to be replaced with another logo during rebroadcasting. Or the circumstance has demanded to televise the specified logo at a spot that has been a blank area during rebroadcasting.

The conventional art has easily allowed a specific logo to replace a predetermined area of a picture. However it has been difficult to execute such replacement quite naturally to show that the logo appears to have been a part of the picture. For example, during the ball game rebroadcasting, if the logo shown on the back fence is replaced with another logo, the ball player standing in front of such logo is also replaced, thus spoiling the whole broadcasting.

An objective of the present invention is to provide an art of replacing a part of a present picture with a logo matched thereto so as to show that the picture (logo) appears to have existed as a part of the present picture.

The above objective of the present invention is achieved by a picture replacement system for replacing a specified area of a present picture with a desired picture comprising: at least one camera; picture generation means for generating a desired picture for replacing; selection means for selecting a replacement area within a reference picture in advance and storing a position of the replacement area and a reference picture within the replacement area; detection means for detecting a replacement area within a present picture taken by the camera based on the position of the replacement area and the reference picture within the replacement area; key signal generation means for generating a key signal indicating an identical part of a present picture within the detected replacement area and the stored reference picture; and replacement means for replacing an identical part of a present picture and a reference picture within a part picture of the desired picture corresponding to the identical part based on the key signal.

It is preferable that the camera shoots a present picture at a fixed range for shooting a reference picture.

It is preferable that the detection means comprises: area detection means for selecting a predetermined number of areas in a present picture, calculating a difference between a present picture within each selected area and a stored reference picture and detecting an area presenting a minimum difference result as a replacement area; and correction means for correcting a shift between the stored replacement area and the detected replacement area based on an area position of the detected replacement area. The replacement area can be detected from the present picture accurately even though the shooting range is shifter owing to the camera shaken in the wind.

The above objective is further achieved by a replacement means comprises a switch selectable at a unit of one picture element pixel based on a key signal; responding to the key signal indicating an identical part of a present picture and a reference picture, the switch selects to input a part of desired picture corresponding to the identical part and responding to the key signal indicating a different part between a present picture and a reference picture, the switch selects to input a part of present picture corresponding to the different part.

The above objective is further achieved by a picture replacement device for replacing a specified area of a present picture with a desired picture comprising: picture generation means for generating a desired picture for replacing; selection means for selecting a replacement area within a reference picture in advance and storing a position of the replacement area and a reference picture within the replacement area; area detection means for selecting a predetermined number of areas within a present picture taken by a camera; calculating a difference between a present picture of each the selected area and the stored reference picture; and detecting an area presenting a minimum difference result as a replacement area; correction means for correcting a position of the stored replacement area based on an area position of the detected replacement area; key signal generation means for generating a key signal indicating an identical part of a present picture within the detected replacement area and a reference picture within a replacement area corrected by the correction means; and a switch selectable at a unit of one picture element pixel based on the key signal; responding to the key signal indicating an identical part of a present picture and a reference picture, the switch selects to input the desired picture and responding to the key signal indicating a different part between a present picture and a reference picture, the switch selects to input the present picture.

The above objective is achieved by a picture replacement method of replacing a specified area of a present picture with a desired picture comprising: generation step of generating a desired picture for replacing; selection step of selecting a replacement area replaced with a desired picture within reference picture that has been taken; storage step of storing a position of the replacement area and a reference picture within the replacement area; detection step of detecting an area as the replacement area within a present picture; key signal generation step of generating a key signal indicating an identical part of a present picture and a reference picture by comparing a present picture within the detected area and a reference picture within the stored replacement area; and replacement step of replacing the identical part of a present picture and a reference picture with a part of the desired picture corresponding to the identical part based on the key signal.

It is preferable that the present picture is taken in a condition using the same angle and direction as taking a reference picture.

It is further preferable that the detection step further comprising: area detection step of selecting a predetermined number of areas expected to be a replacement area within a present picture; calculating a difference between a present picture of each the selected area and a reference picture that has been stored and detecting an area presenting a minimum difference result as a replacement area; and correction step of correcting a shift between a position of an area detected by the area detection step and a position of a replacement area that has been stored in advance.

It is preferable that the replacement step comprises a step of replacing an identical picture element pixel of a present picture and a reference picture with a picture element pixel of a desired picture corresponding to the identical picture element pixel based on a key signal; and keeping a different picture element pixel between a present picture and a reference picture as picture element pixel of a present picture.

This and other objects, features and advantages of the present invention will become more apparent upon a reading of the following detailed description and drawings, in which:
Fig. 1A to 1E are views explaining a logo replacement method of the present invention; and
Fig. 2 is a block diagram of a logo replacement system and a logo replacement method of the present invention.

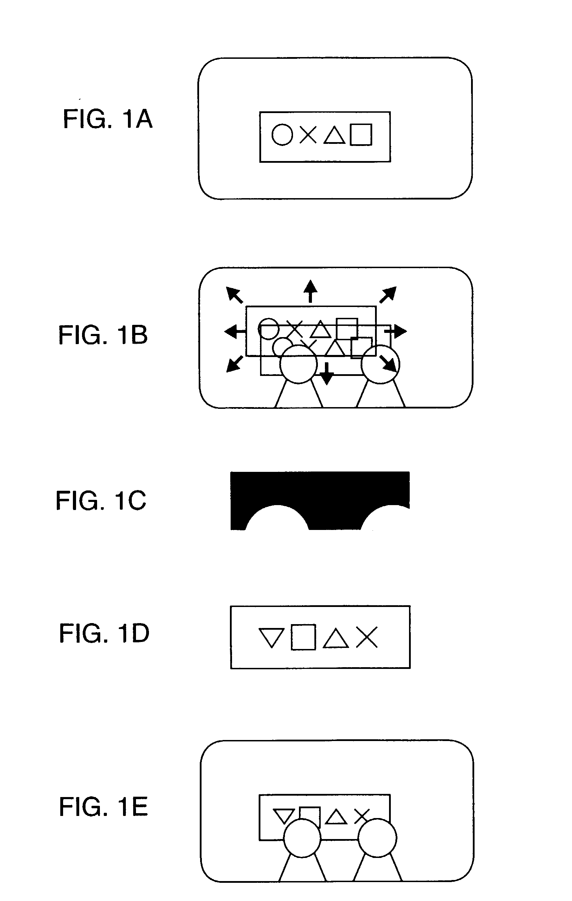

Prior to explaining the embodiment of the present invention in detail, the principle of the present invention is described referring to Fig. 1A to Fig. 1E.

A reference picture is taken by a camera set at a basic camera position. Fig. 1A shows the reference picture taken by the camera. The reference picture is taken in the condition where nothing obstructs the picture within a replacement area described later. For example, the reference picture as shown in Fig. 1A is taken so as not to cause any part of the picture ○×Δ□ to be masked by a person standing in front of the picture O×Δ□ within the replacement area.

A replacement area that is required to be replaced with a desired logo is selected within the reference picture (Fig. 1A). It is assumed in the present invention that a rectangle area enclosing O×Δ□ is specified as the replacement area. The position of the replacement area to the reference picture and the picture within the replacement area, i.e., O×Δ□ are stored at a unit of one picture element pixel.

After finishing the above-described preparation, the shooting is started.

Upon start of shooting, a replacement area is detected within the picture taken by the camera (hereinafter referred to as "present picture"). The detection is executed in the following manner.

An area at a position corresponding to the replacement area that has been stored in advance is assumed to be the replacement area. A difference between a present picture within the assumed replacement area and the stored reference picture is calculated. Then as shown in Fig. 1B, the replacement area is shifted at a predetermined picture element pixel unit in 8 directions. Each difference between the present picture within each shifted area and the stored reference picture is calculated, respectively. The area presenting the minimum difference value among the thus calculated differences is detected as the replacement area. As a result, the replacement area can be detected accurately even when the shooting range of the camera shaken in the wind has been slightly shifted.

A present picture within the detected replacement area and the stored reference picture are subjected to subtraction at a picture element pixel unit. When the picture element pixel indicates an identical part of the present picture and the reference picture, the subtraction result is 0. When the picture element pixel indicates a different part between the present picture and the reference picture, the subtraction result is not 0. Based on the result, a key signal is generated. The key signal is used for identifying the picture element pixel indicating the identical part or different part of the above two pictures. When the key signal is 0, it normally indicates that the picture element pixel shows an identical picture area. When the key signal is 1, it indicates that the picture element pixel shows a different picture area. Fig. 1C is a view showing a concept of the key signal. In Fig. 1C, the black area represents the picture element pixel where the present picture is identical to the reference picture. The white area represents the picture element pixel where the present picture is different from the reference picture. As shown in Fig. 1C, the difference between the present picture and the reference picture can be identified as above. More specifically, the area hidden behind the person can be defined from the picture within the replacement area.

Lastly the picture within the replacement area is replaced with the logo using the key signal. It is assumed that the picture is replaced with the logo shown in Fig. 1D. The replacing logo has been generated in advance as well as other pictures within the replacement area. For example, the logo ∇□Δ× shown in Fig. 1D and the periphery thereof are generated in pairs. When the key signal is 0 indicating the identical picture element pixel, the picture is replaced with the picture area of the generated logo corresponding to the identical picture element pixel. When the key signal is 1 indicating the different picture element pixel, the present picture is kept unchanged.

As shown in Fig. 1E, the unseen area obstructed by persons is not replaced with the logo and the other area not obstructed by them is replaced with the logo so as to naturally show that the logo appears to have existed behind them.

The system for realizing the aforementioned logo replacement method is described.

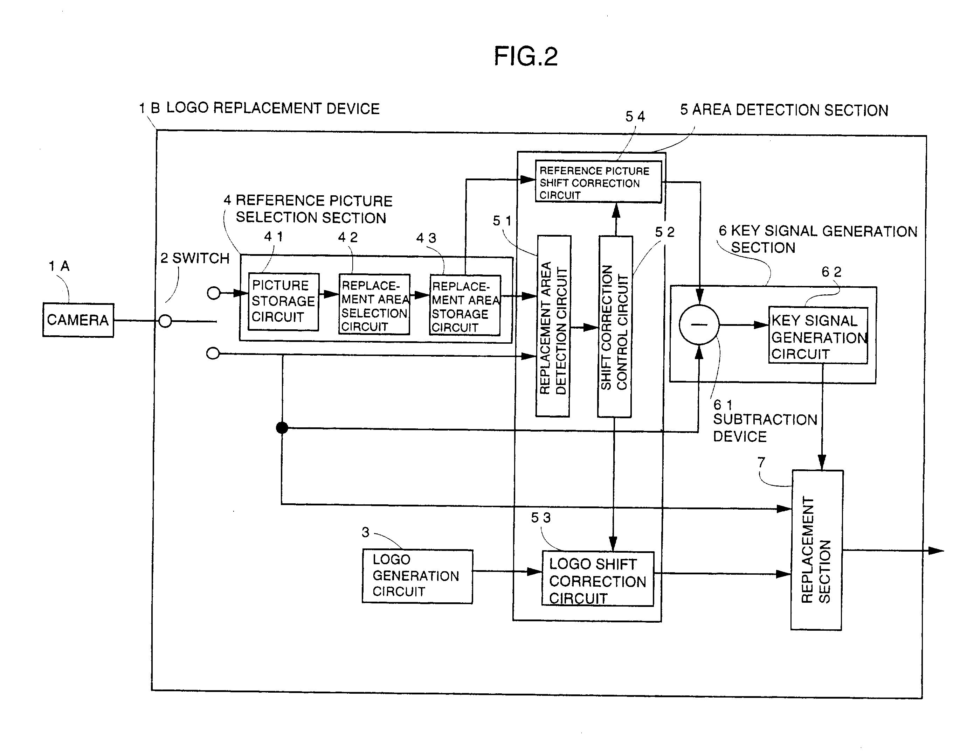

Fig. 2 is a block diagram of the logo replacement system.

The logo replacement system of the embodiment of the present invention comprises a camera 1A and a logo replacement device 1B. The logo replacement device 1B comprises a switch 2, a logo generation section 3, reference picture selection section 4, an area detection section 5, a key signal generation section 6 and a replacement section 7. Each section of the above system is described in detail.
The camera 1A is used for TV broadcasting, having fixed direction and angle to a subject i.e., for shooting the specified range.

The switch 2 inputs picture data taken by the camera 1A for outputting to the reference picture selection section 4 or the area detection section 5, selectively. When the reference picture is selected before shooting, the picture data from the camera 1A is output to the reference picture selection section 4. At shooting, i.e., replacing the logo, the picture data from the camera 1A are output to the area detection section 5.

The logo generation section 3 generates a desired logo that is required for replacement and stores the generated logo. The logo is generated at a picture element pixel unit through computer graphics and the like.
The reference picture selection section 4 comprises a picture storage circuit 41, a replacement area selection circuit 42 and a replacement area storage circuit 43.

The picture storage circuit 41 receives the picture data from the camera 1A. The input picture data is stored as a reference picture therein.
The replacement area selection circuit 42 selects a position of a desired replacement area within the stored reference picture. This processing is executed by displaying the reference picture on a monitor and then selecting the desired replacement area through a keyboard, mouse or the like.

The replacement area storage circuit 43 stores a position of the selected replacement area and the reference picture within the replacement area.

The area detection circuit 5 comprises a replacement area detection circuit 51, a shift correction control circuit 52, a logo shift correction circuit 53 and a reference picture shift correction circuit 54.
The replacement area detection circuit 51 detects the replacement area within the present picture that has been televised. The replacement area detection circuit 51 assumes that the area locating at the position of the replacement area of the input present pictures that has been stored in advance is the replacement area. Then a difference between the present picture within the assumed replacement area and the stored reference picture is calculated. The replacement area is shifted per 1/2 of the picture element pixel in 8 directions setting the assumed replacement area as a center. A difference between each present picture within the shifted replacement areas and the stored reference picture data is calculated, respectively. The area presenting the minimum difference result is detected as the replacement area.

The shift correction control circuit 52 controls the logo shift correction circuit 53 and the reference picture shift correction circuit 54 responding to a number of picture elements pixel shifted when detecting the replacement area sent from the replacement area detection circuit 51. The reference picture correction circuit 53 corrects the shift between the reference picture and the present picture based on the control signal from the shift correction control circuit 52. In the reference picture correction circuit 53, the position of the present picture within the detected replacement area is corrected to coincide with the position of the reference picture within the replacement area that has been stored.

The logo correction circuit 54 corrects a shift between the logo and the present picture based on a control signal from the shift correction control circuit 52. In the logo correction circuit 54, the present picture within the detected replacement area is corrected to coincide with the position of the logo that has been stored.
The key signal generation section 6 comprises a subtraction device 61 and a key signal generation circuit 62.

The subtraction device 61 calculates a difference between the present picture data and the reference picture with its position corrected by the reference picture correction circuit 53.
The key signal generation circuit 62 generates a key signal based on the subtraction result of the subtraction device 61. The key signal generation circuit 62 generates a key signal 0 when the result of the subtraction device 61 is 0 and a key signal 1 when the result of the subtraction device 61 is not 0.

The replacement section 7 is a switch that switches at a unit of one picture element pixel based on the key signal.

The replacement section 7 receives inputs of the logo from the logo correction circuit 54 and the present picture from the camera 1A. When the key signal is 0, the replacement section 7 selects the logo for outputting. When the key signal is 1, the replacement section 7 selects the present picture for outputting. As a result, the present picture is obtained in which only a predetermined area is replaced with the logo.

The logo replacement method is realized by the above-constructed system.

The present invention allows the logo to replace the picture within the replacement area naturally showing that the logo appears to have been a part of the present picture.
The unseen part of the replacement area of the present picture that has been hidden by the person or the object is not replaced by the logo and kept unchanged. The other part of the replacement area is replaced with the logo.
Therefore replacement can be done so naturally as if the logo had existed in the present picture before.

The entire disclosure of Japanese Patent Application No. 8-060449 filed on March 18, 1996 including specification, claims, drawing and summary are incorporated herein by reference in its entirety.

## Claims

1. A picture replacement system for replacing a specified area of a present picture with a desired picture comprising:
at least one camera;
picture generation means for generating a desired picture for replacing;
selection means for selecting a replacement area within a reference picture in advance and storing a position of said replacement area and a reference picture within said replacement area;
detection means for detecting a replacement area within a present picture taken by said camera based on said position of said replacement area and said reference picture within said replacement area;
key signal generation means for generating a key signal indicating an identical part of a present picture within said detected replacement area and said stored reference picture; and
replacement means for replacing an identical part of a present picture and a reference picture within a part picture of said desired picture corresponding to said identical part based on said key signal.

2. The picture replacement system of claim 1, wherein said camera shoots a present picture at a fixed range for shooting a reference picture.

3. The picture replacement system of claim 1, wherein said detection means comprises:
area detection means for selecting a predetermined number of areas in a present picture, calculating a difference between a present picture within each said selected area and a stored reference picture and detecting an area presenting a minimum difference result as a replacement area; and
correction means for correcting a shift between said stored replacement area and said detected replacement area based on an area position of said detected replacement area.

4. The picture replacement system of claim 1, wherein said replacement means comprises a switch selectable at a unit of one picture element pixel based on a key signal; responding to said key signal indicating an identical part of a present picture and a reference picture, said switch selects to input a part of desired picture corresponding to said identical part and responding to said key signal indicating a different part between a present picture and a reference picture, said switch selects to input a part of present picture corresponding to said different part.

5. A picture replacement system for replacing a specified area of a present picture with a desired picture comprising:
a camera for shooting a present picture at a fixed range for shooting a reference picture;
picture generation means for generating a desired picture for replacing;
selection means for selecting a replacement area within a reference picture in advance and storing a position of said replacement area and a reference picture within said replacement area;
area detection means for selecting a predetermined number of areas within a present picture shot by said camera, calculating a difference between a present picture within each said selected area and said stored reference picture and detecting an area presenting a minimum difference result as a replacement area;
correction means for correcting an area position of said shot replacement area based on an area position of said detected replacement area;
key signal generation means for generating a key signal indicating an identical part of a present picture within said detected replacement area and said stored reference picture; and
a switch selectable at a unit of one picture element pixel based on a key signal, for selecting to input said desired picture when said key signal indicating an identical part of said present picture and said reference picture, for selecting input said present picture when said key signal indicating a different part between said present picture and said reference picture.

6. A picture replacement device for replacing a specified area of a present picture with a desired picture comprising:
picture generation means for generating a desired picture for replacing;
selection means for selecting a replacement area within a reference picture in advance and storing a position of said replacement area and a reference picture within said replacement area;
area detection means for selecting a predetermined number of areas within a present picture taken by a camera; calculating a difference between a present picture of each said selected area and said stored reference picture; and detecting an area presenting a minimum difference result as a replacement area;
correction means for correcting a position of said stored replacement area based on an area position of said detected replacement area;
key signal generation means for generating a key signal indicating an identical part of a present picture within said detected replacement area and a reference picture within a replacement area corrected by said correction means; and
a switch selectable at a unit of one picture element pixel based on said key signal; responding to said key signal indicating an identical part of a present picture and a reference picture, said switch selects to input said desired picture and responding to said key signal indicating a different part between a present picture and a reference picture, said switch selects to input said present picture.

7. A picture replacement system for replacing a specified area of a present picture with a desired picture comprising:
picture generation means for generating a desired picture for replacing;
a first storage circuit for storing a reference picture;
selection means for selecting a replacement area replaced with said desired picture within displayed said reference picture;
second storage means for storing a position of said selected replacement area within said reference picture and a reference picture within said replacement area;
area detection means for selecting a predetermined number of areas within a present picture taken by a camera, calculating a difference between a present picture of each said selected area and said stored reference picture, and detecting an area presenting a minimum difference result as a replacement area;
correction means for correcting a position of said replacement area stored in said second storage means and a position of said desired picture based on an area position of said detected replacement area;
key signal generation means for generating a key signal indicating a difference between a present picture and a reference picture based on a difference between a present picture within said detected replacement area and a reference picture within said corrected replacement area; and
a switch for inputting said present picture and said desired picture, outputting said desired picture when said key signal indicates identical pictures thereof and outputting said present picture when said key signal indicates different pictures thereof.

8. The picture replacement system of claim 7, wherein said area detection means comprises means for calculating a difference between a reference picture and a present picture at a picture element pixel unit and detecting an area presenting a minimum difference result as a replacement area.

9. The picture replacement system of claim 7, wherein said correction means comprises means for correcting a position at a unit of one picture element pixel.

10. The picture replacement system of claim 7, wherein said key signal generation means comprises means for generating a key signal at a unit of one picture element pixel.

11. The picture replacement system of claim 7, wherein said switch is selectable at a unit of one picture element pixel.

12. A picture replacement method of replacing a specified area of a present picture with a desired picture comprising:
generation step of generating a desired picture for replacing;
selection step of selecting a replacement area replaced with a desired picture within reference picture that has been taken;
storage step of storing a position of said replacement area and a reference picture within said replacement area;
detection step of detecting an area as said replacement area within a present picture;
key signal generation step of generating a key signal indicating an identical part of a present picture and a reference picture by comparing a present picture within said detected area and a reference picture within said stored replacement area; and
replacement step of replacing said identical part of a present picture and a reference picture with a part of said desired picture corresponding to said identical part based on said key signal.

13. The picture replacement method of claim 12, wherein said present picture is taken in a condition using the same angle and direction as taking a reference picture.

14. The picture replacement method of claim 12, wherein said detection step further comprising:
area detection step of selecting a predetermined number of areas expected to be a replacement area within a present picture; calculating a difference between a present picture of each said selected area and a reference picture that has been stored and detecting an area presenting a minimum difference result as a replacement area; and
correction step of correcting a shift between a position of an area detected by said area detection step and a position of a replacement area that has been stored in advance.

15. The picture replacement method of claim 12, wherein said replacement step comprises a step of replacing an identical picture element pixel of a present picture and a reference picture with a picture element pixel of a desired picture corresponding to said identical picture element pixel based on a key signal; and keeping a different picture element pixel between a present picture and a reference picture as picture element pixel of a present picture.
